# DEMANDE DE BREVET EUROPEEN

(11) **EP 2 236 556 A1**
(43) Date de publication de la demande: **06.10.2010**
(21) Numéro de dépôt: 10157062.0
(22) Date de dépôt: 19.03.2010
(51) Int. Cl.: C08L 27/12, C08L 53/00, C08L 55/00, C08L 83/04, C01B 31/08, C08K 3/04, C08J 3/22, C08J 5/00

(54) **Procédé de préparation d'un matériau composite élastomérique à haute teneur en nanotubes**

(30) Priorité: 23.03.2009 FR 0951840
(71) Demandeur: Arkema France, 92700 Colombes (FR)
(72) Inventeur: Korzhenko, Alexander, 64000, PAU (FR); Merceron, Amélie, 64230, AUSSEVIELLE (FR)
(74) Mandataire: Cabinet Plasseraud

(57) **Abrégé**

La présente invention concerne un procédé de préparation, dans un co-malaxeur, d'un matériau composite renfermant une base de résine élastomérique thermodurcissable et des nanotubes de carbone.

Elle concerne également le matériau composite ainsi obtenu et son utilisation pour la fabrication de produits composites.

## Description

La présente invention concerne un procédé de préparation d'un matériau composite renfermant une base de résine élastomérique thermodurcissable et des nanotubes de carbone, ainsi que le matériau composite ainsi obtenu et son utilisation pour la fabrication de produits composites.

Les élastomères sont des polymères dotés de propriétés d'élasticité caoutchoutique qui trouvent une application dans divers domaines, dont la fabrication de pièces automobiles telles que des pneumatiques, des joints ou des tubes, la pharmacie, l'industrie électrique, les transports ou le bâtiment, par exemple. Dans certaines de ces applications, il peut être intéressant de leur conférer des propriétés de conduction électrique et/ou d'améliorer leurs propriétés mécaniques. Pour ce faire, il est possible de leur incorporer des charges conductrices telles que des nanotubes de carbone (ou NTC).

Dans le même ordre d'idées, le document WO 2007/035442 décrit un procédé pour incorporer de 0,1 à 30% en poids, et de préférence de 0,1 à 1% en poids, de NTC dans une base de résine siliconée liquide ou solide, consistant à disperser ceux-ci dans la base de résine à l'aide de dispositif de mélangeage classiques, de broyeurs à cylindres ou d'ultrasons. L'Exemple 7 de ce document divulgue plus précisément un mélange-maître à 25% en poids de NTC, préparé par dispersion des NTC dans une base de résine siliconée à l'aide d'un mélangeur Waring (mélangeur à couteaux). Le mélange-maître obtenu se présente sous la forme d'une poudre libre mouillée.

La technique proposée dans ce document ne permet pas non plus de disperser des quantités supérieures à 25% en poids de charges d'aussi faible densité apparente que les NTC. En particulier, il n'est pas possible d'incorporer dans les résines ces taux de NTC sans former sensiblement d'agrégats de plus de 10 µm à partir de ceux-ci, compte tenu de leur structure naturellement très enchevêtrée. Cette mauvaise dispersion des NTC engendre une fragilisation des composites formés à partir de ceux-ci, qui se traduit notamment par l'apparition de nanofissures. En outre, le mélange-maître obtenu selon le document précité se présente sous forme de poudre, qui est peu aisée à manipuler.

Une autre solution pour obtenir des élastomères chargés en NTC consiste à mélanger les NTC et des élastomères thermoplastiques, en présence de plastifiants. Ces plastifiants peuvent notamment être mélangés aux nanotubes sous forme de pré-composite, qui est ensuite dilué dans la matrice élastomérique (FR 2 916 364). Les pré-composites exemplifiés dans ce document sont préparés dans un dispositif de compoundage tel qu'un co-malaxeur BUSS^{®}. Ils ne renferment toutefois au mieux que 5% en poids de NTC. Ainsi, il n'est pas suggéré que le dispositif de compoundage précité puisse permettre d'incorporer plus de 5% en poids de NTC dans une base élastomérique, a fortiori dans une base de résine élastomérique thermodurcissable, même en l'absence de plastifiant.

D'autres documents (WO 2006/079060, WO 2007/063253, WO 2005/081781, WO 2009/030358, WO 03/085681, WO 2006/072741, WO 2007/035442, WO 2008/025962, JP-2008 163 219, US 2007/213450) divulguent des procédés pour mélanger des NTC à une base de résine élastomère thermoplastique ou thermodurcissable.

Il subsiste toutefois le besoin de disposer d'un moyen permettant de disperser simplement et de façon homogène, à l'échelle industrielle, plus de 5% en poids de NTC dans une base de résine élastomérique thermodurcissable, pour fabriquer des mélanges-maîtres susceptibles d'être aisément manipulés puis dilués dans une matrice polymère afin de former des pièces composites.

Dans ce contexte, la Demanderesse a découvert qu'il était possible de formuler des composites, et en particulier des mélanges-maîtres, à base d'élastomères thermodurcissables en introduisant une composition liquide, contenant une base de résine élastomérique thermodurcissable, dans un co-malaxeur, où elle est malaxée avec les nanotubes.

La présente invention a ainsi pour objet un procédé de préparation d'un matériau composite renfermant de plus de 5% en poids, et jusqu'à 70% en poids, de nanotubes, comprenant :
(a) l'introduction, dans un co-malaxeur :
   - d'une composition polymérique liquide renfermant au moins une base de résine élastomérique qui comprend, ou est constituée par, au moins une base d'élastomère thermodurcissable, et
   - de nanotubes de carbone,
(b) le malaxage de la composition polymérique et des nanotubes au sein dudit co-malaxeur, pour former un matériau composite,
(c) la récupération du matériau composite, éventuellement après transformation en une forme physique solide agglomérée.

Par « co-malaxeur », on entend, dans la présente description, un appareillage classiquement utilisé dans l'industrie des matières plastiques pour le mélange à l'état fondu de polymères thermoplastiques et d'additifs en vue de produire des composites. Dans cet appareillage, qui comprend habituellement un rotor pourvu d'ailettes adaptées à coopérer avec des dents montées sur un stator, la composition polymérique et les additifs sont mélangés sous un fort cisaillement. La matière fondue sort généralement de l'appareillage sous une forme physique solide agglomérée, par exemple sous forme de granulés, ou sous forme de joncs, de bande ou de film.

Des exemples de co-malaxeurs utilisables selon l'invention sont les co-malaxeurs BUSS^{®} MDK 46 et ceux de la série BUSS^{®} MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adaptés par exemple à leur orifice de sortie, qui peut être constitué d'une vis d'extrusion ou d'une pompe.

Les co-malaxeurs utilisables selon l'invention ont de préférence un rapport de vis L/D allant de 7 à 22, par exemple de 10 à 20.

En outre, l'étape de malaxage est généralement mise en oeuvre à une température qui est supérieure à la température de transition vitreuse (Tg) pour les polymères amorphes et à la température de fusion pour les polymères semi-cristallins. Cette température est fonction du polymère spécifiquement utilisé et généralement mentionnée par le fournisseur du polymère. A titre d'exemple, la température de malaxage peut aller de la température ambiante à 260°C, par exemple de 80 à 260°C, en général de 80 à 220°C, de préférence de 100 à 220°C, en particulier de 120 à 200°C, et plus préférentiellement de 150 à 200°C.

La Demanderesse a mis en évidence que ce procédé permettait d'obtenir des matériaux composites, notamment des mélanges-maîtres, qui peuvent être fortement dosés en nanotubes, tels que des NTC, et qui sont aisément manipulables, dans le cas où ils se présentent sous forme solide agglomérée, notamment sous la forme de granulés, en ce sens qu'ils peuvent être transportés en sacs ou en fûts du centre de production au centre de transformation. Ces matériaux composites peuvent en outre être mis en forme suivant les méthodes classiquement utilisées pour la mise en forme de matériaux thermoplastiques, telles que l'extrusion, l'injection ou la compression.

Par « base de résine élastomérique », on entend, dans la présente description, une composition contenant un polymère organique ou siliconé qui forme, après vulcanisation, un élastomère capable de supporter de grandes déformations de façon quasi-réversible, c'est-à-dire susceptible d'être soumis à une déformation uniaxiale, avantageusement d'au moins deux fois sa longueur d'origine à température ambiante (23°C), pendant cinq minutes, puis de recouvrer, une fois la contrainte relâchée, sa dimension initiale, avec une déformation rémanente inférieure à 10% de sa dimension initiale.

Du point de vue structural, les élastomères sont généralement constitués de chaînes polymériques reliées entre elles, pour former un réseau tridimensionnel. Plus précisément, on distingue parfois les élastomères thermoplastiques, dans lesquels les chaînes polymériques sont reliées entre elles par des liaisons physiques, telles que des liaisons hydrogène ou dipôle-dipôle, des élastomères thermodurcissables, dans lesquels ces chaînes sont reliées par des liaisons covalentes, qui constituent des points de réticulation chimique. Ces points de réticulation sont formés par des procédés de vulcanisation mettant en oeuvre un agent de vulcanisation qui peut par exemple être choisi, selon la nature de l'élastomère, parmi les agents de vulcanisation à base de soufre, en présence de sels métalliques de dithiocarbamates ; les oxydes de zinc combinés à de l'acide stéarique ; les résines phénol-formaldéhyde bifonctionnelles éventuellement halogénées, en présence de chlorure d'étain ou d'oxyde de zinc ; les peroxydes ; les amines ; les hydrosilanes en présence de platine ; etc.

La présente invention concerne plus particulièrement les bases de résine élastomérique renfermant, ou constituées par, au moins un élastomère thermodurcissable éventuellement en mélange avec au moins un élastomère non réactif, c'est-à-dire non vulcanisable (tel que les caoutchoucs hydrogénés).

Les bases de résine élastomérique utilisables selon l'invention peuvent notamment comprendre, voire être constituées par, un ou plusieurs polymères choisis parmi : les polymères fluorocarbonés ou fluorosiliconés ; les résines nitriles ; les homo- et copolymères du butadiène, éventuellement fonctionnalisées par des monomères insaturés tels que l'anhydride maléique, l'acide (méth)acrylique, et/ou le styrène (SBR) ; le néoprène (ou polychloroprène) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs butyle halogénés ; les résines de silicone ; les polyuréthanes ; les polyesters ; les polymères acryliques tels que le poly(acrylate de butyle) porteur de fonctions acide carboxylique ou époxy ; ainsi que leur dérivés modifiés ou fonctionnalisés et leurs mélanges, sans que cette liste ne soit limitative.

On préfère selon l'invention utiliser au moins un polymère choisi parmi : les résines nitriles, en particulier les copolymères d'acrylonitrile et de butadiène (NBR) ; les résines de silicone, en particulier les poly(diméthylsiloxanes) porteurs de groupes vinyliques ; les polymères fluorocarbonés, en particulier les copolymères d'hexafluoropropylène (HFP) et de difluorure de vinylidène (VF2) ou les terpolymères d' d'hexafluoropropylène (HFP), de difluorure de vinylidène (VF2) et de tétrafluoroéthylène (TFE), chaque monomère pouvant représenter plus de 0% et jusqu'à 80% du terpolymère ; et leurs mélanges.

Une caractéristique importante de cette invention est que la composition polymérique contenant la base de résine élastomérique se présente sous forme liquide lors de son injection dans le co-malaxeur dans une première zone du co-malaxeur avant l'introduction des NTC. Par "liquide", on entend que la composition est susceptible d'être pompée dans le co-malaxeur, c'est-à-dire qu'elle présente avantageusement une viscosité dynamique allant de 0,1 à 30 Pa.s, de préférence de 0,1 à 15 Pa.s.

La mesure de la viscosité dynamique est basée sur une méthode générale de détermination des propriétés viscoélastiques de polymères à l'état liquide, à l'état fondu ou à l'état solide. Les échantillons sont soumis à une déformation (ou contrainte), le plus souvent sinusoïdale en tension, compression, flexion ou torsion pour les solides et en cisaillement pour les liquides. La réponse des échantillons à cette sollicitation est évaluée soit par la force ou le couple résultant, soit par la déformation lorsqu'on travaille à contrainte imposée. On détermine ainsi les propriétés viscoélastiques soit en termes de module ou de viscosité, soit en termes de fonction de fluage ou de relaxation. En écoulement, les échantillons sont soumis à un balayage de contraintes et/ou déformations afin de prédire leur comportement en fonction du gradient de cisaillement.

Pour cette détermination, on utilise un viscoélasticimètre, composé des éléments suivants :
- Une enceinte ou un système de régulation thermique (au choix, l'atmosphère lors du test peut être soit de l'azote gaz et/ou liquide, soit de l'air)
- Une unité centrale de commande
- Un système pour la régulation du débit et le séchage de l'air et de l'azote
- Une tête de mesure
- Un système informatique de pilotage de l'appareil et de traitement des données
- Des équipages "porte échantillon"

Comme appareillages utilisables, on peut citer par exemple les appareils RDA2, RSA2, DSR200, ARES ou RME du constructeur Rheometrics, ou MCR301 de Anton Paar.

Les dimensions de l'échantillon sont définies en fonction de sa viscosité et des limites géométriques du système "porte-échantillon" choisi.

Pour la réalisation d'un essai et la détermination de la viscosité dynamique d'une résine thermodurcissable, on suivra méthodologiquement les étapes décrites dans le manuel d'utilisation du viscoélasticimètre utilisé. En particulier, on s'assurera que la relation entre déformation et contrainte est linéaire (viscoélasticité linéaire).

La base de résine utilisée peut elle-même présenter cette viscosité soit à température ambiante (23°C), soit après avoir été chauffée avant injection dans le co-malaxeur pour lui conférer la viscosité voulue. L'homme du métier saura identifier de telles bases de résine élastomérique, en fonction notamment de la masse moléculaire de leurs polymères constitutifs. Dans une variante de l'invention, la base de résine élastomérique peut être solide, par exemple sous forme de gomme. Dans ce cas, la composition polymérique peut contenir, outre cette base, au moins un auxiliaire de traitement sous forme liquide ou cireuse, tel qu'un fluoropolymère, notamment un perfluoropolyéther éventuellement fonctionnalisé et/ou un copolymère de fluorure de vinylidène et d'hexafluoropropylène.

Dans une autre variante de l'invention, la résine élastomérique peut être introduite sous la forme solide, par exemple sous forme de particules broyées dans le co-malaxeur et liquéfiée dans le co-malaxeur par le chauffage et le cisaillement avant l'introduction des NTC.

Cette base de résine élastomérique est mélangée, dans le procédé selon l'invention, avec des nanotubes de carbone (ci-après, NTC). Ceux-ci possèdent des structures cristallines particulières, de forme tubulaire, creuses et closes, composées d'atomes disposés régulièrement en pentagones, hexagones et/ou heptagones, obtenues à partir de carbone. Les NTC sont en général constitués d'un ou plusieurs feuillets de graphène enroulés. On distingue ainsi les nanotubes mono-parois (Single Wall Nanotubes ou SWNT) et les nanotubes multi-parois (Multi Wall Nanotubes ou MWNT). Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère selon l'invention utiliser des NTC à parois multiples.

Les nanotubes mis en oeuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de plus de 0,1 µm et avantageusement de 0,1 à 20 µm, par exemple d'environ 6 µm. Leur rapport longueur/diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur, ou Vapor Grown Carbon Fibers). Leur surface spécifique est par exemple comprise entre 100 et 300 m²/g et leur densité apparente peut notamment être comprise entre 0,01 et 0,5 g/cm³ et plus préférentiellement entre 0,07 et 0,2 g/cm³. Les nanotubes de carbone multi-parois peuvent par exemple comprendre de 5 à 15 feuillets et plus préférentiellement de 7 à 10 feuillets.

Un exemple de nanotubes de carbone bruts est notamment disponible dans le commerce auprès de la société ARKEMA sous la dénomination commerciale Graphistrength^{®} C100.

Les nanotubes peuvent être purifiés et/ou traités (en particulier oxydés) et/ou broyés, avant leur mise en oeuvre dans le procédé selon l'invention. Ils peuvent également être fonctionnalisés par des méthodes de chimie en solution comme l'amination ou la réaction avec des agents de couplage.

Le broyage des nanotubes peut être notamment effectué à froid ou à chaud et être réalisé selon les techniques connues mises en oeuvre dans des appareils tels que broyeurs à boulets, à marteaux, à meules, à couteaux, jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes peut être réalisée par lavage à l'aide d'une solution d'acide sulfurique, ou d'un autre acide, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Une autre voie de purification des nanotubes, destinée en particulier à éliminer le fer et/ou le magnésium qu'ils renferment, consiste à les soumettre à un traitement thermique à plus de 1.000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

On préfère toutefois que les nanotubes soient utilisés dans le procédé selon l'invention à l'état brut.

Par ailleurs, on préfère selon l'invention utiliser des nanotubes obtenus à partir de matières premières d'origine renouvelable, en particulier d'origine végétale, comme décrit dans le document FR 2 914 634.

La quantité de nanotubes mise en oeuvre selon l'invention représente de plus de 5% en poids, et jusqu'à 70% en poids, suivant que le matériau composite recherché est destiné à être directement transformé en une pièce composite ou qu'il se présente sous la forme d'un mélange-maître destiné à être dilué dans une matrice polymère. Dans ce dernier cas, le matériau composite selon l'invention renferme par exemple de 10 à 50% en poids, de préférence de 20 à 50% en poids, et plus préférentiellement de 25 à 40% en poids, voire de 30 à 40% en poids, de nanotubes, par rapport au poids total du matériau composite.

Lorsque le mélange-maître selon l'invention renferme au moins un polymère choisi parmi : les résines nitriles, les résines siliconées, les polymères fluorocarbonés et leurs mélanges, on préfère qu'il contienne de 20 à 40% en poids de nanotubes de carbone, par rapport au poids total du mélange-maître. En particulier, lorsque le mélange-maître selon l'invention renferme au moins un polymère de type résine siliconée, on préfère qu'il contienne de 30 à 40% en poids de nanotubes de carbone, par rapport au poids total du mélange-maître.

Les nanotubes peuvent être introduits dans le co-malaxeur soit par une trémie d'alimentation distincte de la zone d'injection de la base de résine élastomérique, soit en mélange avec celle-ci.

La composition polymérique utilisée selon l'invention peut renfermer, outre les auxiliaires de traitement mentionnés précédemment, des agents d'expansion, notamment les préparations à base de diamine d'acide azodicarbonique telles que celles commercialisées par la société LANXESS sous la dénomination commerciale Genitron®. Il s'agit de composés qui se décomposent à 140-200°C pour former, lors de l'étape de malaxage, des cavités dans le matériau composite qui facilitent son introduction ultérieure dans une matrice polymère.

En variante ou en plus, la composition polymérique peut contenir des composés destinés à diminuer le collant de la base de résine élastomérique et/ou d'améliorer la formation des granulés. Un exemple d'un tel composé est un copolymère acrylique à blocs tel que le copolymère tribloc poly(méthacrylate de méthyle) / poly(acrylate de butyle) / poly(méthacrylate de méthyle) disponible auprès de la société ARKEMA sous la dénomination commerciale Nanostrength® M52N. En variante, il est possible d'utiliser un copolymère polystyrène / 1,4-polybutadiène / poly(méthacrylate de méthyle) également commercialisé par la société ARKEMA, sous la référence Nanostrength®.

La composition polymérique selon l'invention peut ainsi renfermer de 40 à 80% en poids de résine nitrile et jusqu'à 20% en poids de copolymère acrylique.

D'autres additifs utilisables sont notamment : des charges à base de graphène autres que des nanotubes (notamment des fullerènes), de la silice ou du carbonate de calcium ; des filtres UV, notamment à base de dioxyde de titane ; des retardateurs de flamme ; et leurs mélanges. La composition polymérique peut en variante ou en plus contenir au moins un solvant de la base de résine élastomérique.

Au terme du procédé selon l'invention, on obtient un matériau composite qui peut, après refroidissement, se trouver sous une forme solide directement utilisable. L'invention a également pour objet le matériau composite susceptible d'être obtenu suivant le procédé ci-dessus.

Des exemples de matériaux composites susceptibles d'être obtenus selon l'invention comprennent notamment ceux commercialisés par la société ARKEMA sous les dénominations commerciales Graphistrength^{®} C E3-35 (renfermant 35% en poids de NTC multi-parois dans une résine de silicone) ; Graphistrength^{®} C E2-40 (renfermant 40% en poids de NTC multi-parois dans une résine nitrile) ; et Graphistrength^{®} C E1-20 (renfermant 20% en poids de NTC multi-parois dans un polymère fluorocarboné).

Ce matériau composite peut être utilisé tel quel, c'est-à-dire mis en forme selon toute technique appropriée, notamment par injection, extrusion, compression ou moulage, suivie d'un traitement de vulcanisation. Un agent de vulcanisation peut avoir été ajouté au matériau composite pendant l'étape de malaxage (dans le cas où sa température d'activation est supérieure à la température de malaxage). On préfère toutefois qu'il soit ajouté au matériau composite immédiatement avant ou pendant sa mise en forme, de façon à disposer de plus de latitude pour ajuster les propriétés du composite.

En variante, le matériau composite selon l'invention peut être utilisé comme mélange-maître et donc dilué dans une matrice polymère thermoplastique pour former un produit composite après mise en forme. Là encore, l'agent de vulcanisation peut être introduit soit pendant l'étape de malaxage, soit (plus préférentiellement) dans la matrice polymère, c'est-à-dire au cours de la formulation de cette dernière ou lors de sa mise en forme. Dans cette forme d'exécution de l'invention, le produit composite final peut contenir de 0,01% à 35% en poids de nanotubes, de préférence de 1,5 à 20% en poids de nanotubes, par exemple.

L'invention a également pour objet l'utilisation du matériau composite décrit précédemment pour la fabrication d'un produit composite et/ou en vue de conférer au moins une propriété électrique, mécanique et/ou thermique à une matrice polymère.

Elle a encore pour objet un procédé de fabrication d'un produit composite comprenant :
- la fabrication d'un matériau composite suivant le procédé décrit précédemment, et
- l'introduction du matériau composite dans une matrice polymère.

La matrice polymère contient généralement au moins un polymère choisi parmi les homo- ou copolymères à gradients, à blocs, statistiques ou séquencés, thermodurcissables. On utilise de préférence selon l'invention au moins un polymère choisi parmi ceux listés précédemment. Avantageusement, le polymère inclus dans la matrice polymère appartient à la même classe chimique (résine nitrile, résine siliconée ou polymère fluorocarboné, par exemple) que l'un au moins des polymères de la base de résine élastomérique.

La matrice polymère peut en outre renfermer au moins un agent de vulcanisation et éventuellement un accélérateur de vulcanisation, comme indiqué précédemment, ainsi que divers adjuvants et additifs tels que des lubrifiants, des pigments, des stabilisants, des charges ou renforts, des agents anti-statiques, des fongicides, des agents ignifugeants et des solvants.

La dilution du matériau composite dans la matrice polymère peut se faire par tout moyen, notamment à l'aide de mélangeurs à cylindres, internes ou coniques.

Pour améliorer les propriétés électriques des produits composites à base de résine de silicone, on préfère selon l'invention que le matériau composite ou mélange-maître soit d'abord mélangé avec une partie de la matrice polymère et avec les agents de vulcanisation, jusqu'à l'obtention d'un mélange homogène, avant d'introduire le reste de la matrice polymère puis de procéder à un moulage du produit composite en la forme souhaitée.

Le produit composite ainsi obtenu peut notamment être utilisé pour la fabrication de joints de carrosserie ou d'étanchéité, de pneus, de plaques anti-bruit, de dissipateurs de charges statiques, de couche conductrice interne pour des câbles à haute et moyenne tension, ou de systèmes anti-vibratoires tels que des amortisseurs automobiles, ou encore dans la fabrication d'éléments de structure de gilets pare-balles, sans que cette liste ne soit limitative.

En vue de ces applications, il peut être mis en forme par tout moyen, notamment par extrusion, moulage ou moulage par injection.

L'invention sera mieux comprise à la lumière des exemples non limitatifs et purement illustratifs suivants.

### EXEMPLES

### Exemple 1 : Fabrication d'un mélange-maître renfermant une base de résine nitrile

On a introduit, dans la première trémie d'alimentation d'un co-malaxeur BUSS^{®} MDK 46 (L/D = 11), équipé d'une vis d'extrusion et d'un dispositif de granulation, des nanotubes de carbone (Graphistrength^{®} C100 d'ARKEMA) et une poudre de copolymère acrylique (Nanostrength^{®} M52N D'ARKEMA). Un copolymère butadiène-acrylonitrile (NIPOL^{®} 1312V de HALLSTAR) a été préchauffé à 160°C puis injecté sous forme liquide à 190°C dans la 1^{ère} zone du co-malaxeur. Les consignes de température et le débit au sein du co-malaxeur étaient réglés à 200°C et 12 kg/h, respectivement. La vitesse de rotation de la vis était de 240 tours/min.

En sortie d'appareil, on a obtenu un jonc homogène qui a été découpé sous jet d'eau en des granulés constitués d'un mélange-maître renfermant 40% en poids de nanotubes, 55% en poids de résine nitrile et 5% en poids de copolymère acrylique. Ces granulés ont ensuite été séchés à 50°C environ avant d'être conditionnés.

Ces granulés peuvent être ensuite dilués dans une matrice polymère contenant un agent de vulcanisation, et mis en forme.

En variante, une partie de la résine nitrile (de 5 à 10% en poids) peut être introduite dans le co-malaxeur sous forme solide, granulée ou broyée, par exemple dans la première trémie d'alimentation.

### Exemple 2 : Fabrication d'un mélange-maître renfermant une base de résine élastomérique siliconée

On introduit des nanotubes de carbone (Graphistrength^{®} C100 d'ARKEMA) dans la première trémie d'alimentation d'un co-malaxeur BUSS^{®} MDK 46 (L/D = 11) équipé d'une vis d'extrusion et d'un dispositif de granulation. Un polydiméthylsiloxane linéaire à extrémités vinyliques (Silopren^{®} U10 de MOMENTIVE) est introduit à une température de 40-60°C environ, pour partie dans la 1^{ère} zone du co-malaxeur et pour partie après le 1^{er} anneau de restriction du co-malaxeur. Le malaxage est réalisé à 90-110°C.

En sortie d'appareil, on a obtenu un jonc homogène qui a été découpé sous jet d'eau en des granulés constitués d'un mélange-maître renfermant 35% en poids de nanotubes et 65% en poids de résine siliconée. Ces granulés ont ensuite été séchés à 50°C environ avant d'être conditionnés.

Ces granulés peuvent être ensuite dilués dans une matrice polymère contenant un agent de vulcanisation, par exemple dans une matrice siliconée pour la fabrication de joints d'étanchéité ou dans une matrice caoutchouc pour la fabrication de pneus.

### Exemple 3 : Fabrication d'un mélange-maître renfermant une base de résine élastomérique fluorée

On a préparé, dans le même co-malaxeur que celui décrit à l'Exemple 1, une formulation renfermant : 35% en poids de nanotubes de carbone ; 40% en poids de fluoroélastomère Viton^{®} A100 de DU PONT, utilisé sous forme de broyat de particules de 1-5 mm ; et 25% en poids d'un auxiliaire de traitement constitué d'un perfluoropolyéther fonctionnalisé commercialisé par la société SOLEXIS sous la dénomination commerciale Technoflon^{®} FPA1.

Les constituants de cette formulation ont tous été introduits dans la première trémie d'alimentation du co-malaxeur. Après malaxage à 160-180°C, on a obtenu un jonc de matériau composite, qui a été découpé en granulés.

Ce mélange-maître peut être dilué dans une matrice polymère à température ambiante pour fabriquer un produit composite.

### Exemple 4 : Fabrication d'un mélange-maître renfermant une base de résine élastomérique fluorée

On a préparé, dans le même co-malaxeur que celui décrit à l'Exemple 3, une formulation renfermant : 40% en poids de nanotubes de carbone ; 20% en poids du même fluoroélastomère qu'à l'Exemple 3 ; 20% en poids de résine liquide de fluoroélastomère (copolymère de fluorure de vinylidène et d'hexafluoropropylène) commercialisée par la société DAIKIN AMERICA sous la dénomination commerciale Daikin^{®} DAI-EL G101 ; et 20% en poids du même auxiliaire de traitement qu'à l'Exemple 3.

Les constituants de cette formulation ont tous été introduits dans la première trémie d'alimentation du co-malaxeur, excepté la résine qui a été injectée à 160°C. Après malaxage à 160-180°C, on a obtenu un jonc de matériau composite, qui a été découpé en granulés.

Ce mélange-maître peut être dilué dans une matrice polymère, notamment à base de PVDF, pour fabriquer un produit composite. En variante, il peut être utilisé tel quel pour la fabrication de conduites de transport d'essence.

### Exemple 5 : Fabrication d'un mélange-maître renfermant une base de résine élastomérique fluorée solide

On a introduit, dans la première trémie d'alimentation d'un co-malaxeur BUSS^{®} MDK 46 (L/D = 11), équipé d'une vis d'extrusion et d'un dispositif de granulation, la résine VITON^{®} A100 sous forme de particules solides, dosées par le doseur gravimétrique, en utilisant un dispositif d'alimentation de bandes.

Des nanotubes de carbone (Graphistrength^{®} C100 d'ARKEMA) ont été introduits dans la 2' zone d'alimentation, après que la résine ait été liquéfiée dans 1^{ère} zone du co-malaxeur. Les consignes de température au sein du co-malaxeur étaient réglées à 150°C dans la Zone 1 et 140°C dans la Zone 2 et le débit était réglé à 12 kg/h. La vitesse de rotation de la vis était de 200 tours/min.

En sortie de la filière 4x4 mm, on a obtenu un jonc homogène qui a été découpé sous jet d'eau en des granulés constitués d'un mélange-maître renfermant 20% en poids de nanotubes. Ces granulés ont ensuite été séchés à 50°C environ avant d'être conditionnés.

Ces granulés peuvent être ensuite dilués dans une matrice polymère contenant un agent de vulcanisation, et mis en forme.

## Revendications

1. Procédé de préparation d'un matériau composite renfermant plus de 5% en poids, et jusqu'à 70% en poids de nanotubes, comprenant :
(a) l'introduction, dans un co-malaxeur, d'une composition polymérique liquide renfermant :
- au moins une base de résine élastomérique qui comprend, ou est constituée par, au moins une base d'élastomère thermodurcissable, et
- des nanotubes de carbone,
(b) le malaxage de la composition polymérique et des nanotubes au sein dudit co-malaxeur, pour former un matériau composite,
(c) la récupération du matériau composite, éventuellement après transformation en une forme physique solide agglomérée.

2. Procédé selon la revendication 1, **caractérisé en ce que** le co-malaxeur a un rapport de vis L/D allant de 7 à 22, plus préférentiellement de 10 à 20.

3. Procédé selon l'une quelconque des revendications 1 et 2, **caractérisé en ce que** la base de résine élastomérique comprend, voire est constituée par, un ou plusieurs polymères choisis parmi : les polymères fluorocarbonés ou fluorosiliconés ; les résines nitriles ; les homo- et copolymères du butadiène, éventuellement fonctionnalisées par des monomères insaturés tels que l'anhydride maléique, l'acide (méth)acrylique, et/ou le styrène (SBR) ; le néoprène (ou polychloroprène) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs butyle halogénés ; les résines de silicone ; les polyuréthanes ; les polyesters ; les polymères acryliques tels que le poly(acrylate de butyle) porteur de fonctions acide carboxylique ou époxy ; ainsi que leur dérivés modifiés ou fonctionnalisés et leurs mélanges.

4. Procédé selon la revendication 3, **caractérisé en ce que** la base de résine élastomérique comprend, voire est constituée par, un ou plusieurs polymères choisis parmi : les résines nitriles, en particulier les copolymères d'acrylonitrile et de butadiène (NBR) ; les résines de silicone, en particulier les poly(diméthylsiloxanes) porteurs de groupes vinyliques ; les polymères fluorocarbonés, en particulier les copolymères d'hexafluoropropylène (HFP) et de difluorure de vinylidène (VF2) et les terpolymères d' d'hexafluoropropylène (HFP), de difluorure de vinylidène (VF2) et de tétrafluoroéthylène (TFE), chaque monomère pouvant représenter plus de 0% et jusqu'à 80% du terpolymère ; et leurs mélanges.

5. Procédé l'une quelconque des revendications 1 à 4, **caractérisé en ce que** le matériau composite renferme de 10 à 50% en poids, de préférence de 20 à 50% en poids, et plus préférentiellement de 25 à 40% en poids, de nanotubes, par rapport au poids total du matériau composite.

6. Matériau composite susceptible d'être obtenu suivant le procédé selon l'une quelconque des revendications 1 à 5.

7. Utilisation du matériau composite selon la revendication 6 pour la fabrication d'un produit composite et/ou en vue de conférer au moins une propriété électrique, mécanique et/ou thermique à une matrice polymère.

8. Procédé de fabrication d'un produit composite comprenant :
- la fabrication d'un matériau composite suivant le procédé selon l'une quelconque des revendications 1 à 5, et
- l'introduction du matériau composite dans une matrice polymère.
